# EUROPEAN PATENT APPLICATION

(11) **EP 4 802 876 A1**
(43) Date of publication of application: **09.09.2026**
(21) Application number: 26158350.4
(22) Date of filing: 13.02.2026
(51) Int. Cl.: A01D 75/18, A01F 15/08

(54) **LARGE SQUARE BALER DRIVETRAIN HEALTH MONITORING SYSTEM**

(30) Priority: 06.03.2025 US 202519071986
(71) Applicant: Deere & Company, Moline, IL 61265 (US)
(72) Inventor: Eakins, Nolan D., Mannheim (DE); Steinhart, Eric E., Mannheim (DE); Pieper, Mark A., Mannheim (DE); Shook, Gerald W., Mannheim (DE)
(74) Representative: Stein, Stefan

(57) **Abstract**

A baler implement includes a force sensor coupled to a plunger for detecting a force applied thereto. A baler controller may determine a cumulative usage value for a component of a drivetrain moving the plunger from a peak force applied to the plunger during each respective movement cycle of the plunger, i.e., a peak force for each back-and-forth movement cycle of the plunger. When the cumulative usage value for the component is greater than a component threshold value, the baler controller may communicate a notification signal to a communicator. The notification signal is operable to cause the communicator to generate a message to indicate suggested maintenance of the component of the drivetrain.

## Description

### TECHNICAL FIELD

The disclosure generally relates to a square baler implement, and a method of monitoring the square baler implement for recommended maintenance.

### BACKGROUND

Agricultural baler implements gather, compress, and shape crop material into a bale. One example implementation of the baler implement is configured to form crop material into a bale having a parallelepiped shape. Such baler implements are often called a square baler implement. The square baler implement may be classified as a large square baler or a small square baler based on the size of the bale they are configured to produce. Square baler implements have been used in crop harvesting for many years, and utilize a compression system including a gearbox with a crank arm and connecting link which is attached to a plunger. A power source, e.g., a PTO shaft coupled to a an agricultural tractor, provides rotational power to the gearbox, which includes an output shaft arranged for rotation about a transverse axis. The transverse axis is generally orthogonal to a longitudinal direction of the baler implement. The crank arm is attached to the output shaft for rotation with the output shaft about the transverse axis. The crank arm extends radially outward from the transverse axis to a distal end. The connecting link is attached to the distal end of the crank arm, and to the plunger. Rotation of the crank arm moves the connecting link and the plunger linearly generally along the longitudinal direction of the baler implement. During each rotation of the crank arm, the plunger moves back and forth within the compression chamber. The reciprocating plunger compresses the crop in the baling or compression chamber as the plunger moves towards the rear of the baler.

When the plunger compresses the crop material in the compression chamber, the crop material exerts a resultant force against the plunger. This resultant force is transmitted through the plunger to the connecting link, the crank arm, and the gearbox. During normal operations, the repeated forces exerted on these components, particularly a crank bearing interconnecting the crank arm and the connecting rod, and/or components of the gearbox, may cause normal wear, ultimately resulting in the need for replacement of these components over time. It is advantageous to replace these wear components prior to their failing in the field during use to avoid undesirable downtime during harvest periods.

### SUMMARY

A baler implement for forming crop material into a bale having a parallelepiped shape is provided. The baler implement includes a plunger moveable in a reciprocating motion within a compression chamber through a plurality of movement cycles. The plunger moves from a fully retracted position, to a fully extended position, and back to the fully retracted position during each respective movement cycle. A power input is configured to receive rotational power from a power source. A drivetrain is coupled to the power input for receiving the rotational power from the power input. The drivetrain is configured to convert the rotational power from the power input into reciprocating linear movement of the plunger for moving the plunger through the plurality of movement cycles. A force sensor is operable and/or configured to detect data related to a force applied to the plunger. The force sensor may be, but is not required to be, coupled to the plunger. The force sensor may further communicate a force sensor signal indicative of the detected data. A baler controller includes a processor and a memory having a drivetrain monitoring algorithm stored thereon. The processor is operable and/or configured to execute the drivetrain monitoring algorithm to determine a cumulative usage value for a component of the drivetrain from the force sensor signal indicative of the force applied to the plunger. The baler controller mat then compare the cumulative usage value for the component of the drivetrain to a component threshold value to determine if the cumulative usage value for the component is greater than the component threshold value, or if the cumulative usage value for the component is equal to or less than the component threshold value. When the cumulative usage value for the component is greater than the component threshold value, the baler controller may communicate a notification signal to a communicator. The notification signal is operable and/or configured to cause the communicator to generate a message to indicate suggested maintenance of the component of the drivetrain.

In one aspect of the disclosure, the processor may be operable and/or configured to execute the drivetrain monitoring algorithm to determine a peak force applied to the plunger during each respective movement cycle.

In one aspect of the disclosure, the processor is operable and/or configured to execute the drivetrain monitoring algorithm to correlate the peak force for each respective movement cycle to a cycle degradation value. The baler controller may then aggregate the respective cycle degradation value from each of the plurality of movement cycles to define the cumulative usage value.

In one aspect of the disclosure, the baler controller may assign the peak force of each respective movement cycle into one of a plurality of different force ranges, with each respective one of the plurality of different force ranges having a respective cycle degradation value. The baler controller may count the number of the movement cycles assigned to each respective one of the plurality of different force ranges, and multiply the number of movement cycles assigned to each respective one of the plurality of different force ranges by the respective cycle degradation value associated with their respective one of the plurality of different force ranges to calculate a respective usage value for each respective one of the plurality of different force ranges. The baler controller may then aggregate the respective usage values for all of the plurality of different force ranges to define the cumulative usage value for the component.

In one aspect of the disclosure, the drivetrain may include a gearbox coupled to the power input for receiving the rotational power therefrom. The gearbox is configured to convert rotational movement of the power input about a longitudinal axis into rotational movement of an output shaft about a transverse axis disposed orthogonal to the longitudinal axis. A crank arm may be coupled to the output shaft of the gearbox and rotatable about the transverse axis with the output shaft. The crank arm extends from the transverse axis radially outward to a distal end. A connecting link may interconnect the distal end of the crank arm and the plunger. Rotational movement of the crank arm about the transverse axis moves the connecting link linearly along the longitudinal axis. A crank bearing may be disposed between and rotatably supporting the distal end of the crank arm and the connecting link.

In one implementation of the disclosure, the component of the drivetrain may be defined as and include the crank bearing, and the component threshold value may be defined as and include a bearing threshold value. In another implementation of the disclosure, the component of the drivetrain may be defined as and include the gearbox, and the component threshold value may be defined as and include is a gearbox threshold value.

In one aspect of the disclosure, the baler implement may further include a position sensor that is coupled to one of the plunger or the drivetrain. The position sensor may be operable and/or configured to detect data related to a position of the plunger and communicate a position sensor signal indicative of the detected data. In one implementation of the disclosure, the processor is operable and/or configured to execute the drivetrain monitoring algorithm to determine a beginning and an end of each respective movement cycle of the plunger from the position sensor signal. As such, the baler controller may use data from the position sensor to identify each respective movement cycle of the plunger, and thereafter identify the peak force observed during that respective movement cycle.

A method of monitoring a baler implement having a plunger moveable in a reciprocating motion within a compression chamber for forming a bale having a parallelepiped shape is also provided. The method includes moving the plunger in a reciprocating motion through a plurality of movement cycles. The plunger moves from a fully retracted position, to a fully extended position, and back to the fully retracted position during each respective movement cycle. A baler controller may then determine a peak force applied to the plunger during each respective movement cycle, and assign the peak force of each respective movement cycle into one of a plurality of different force ranges with the baler controller. Each respective one of the plurality of different force ranges includes a respective cycle degradation value. The baler controller may then count a number of movement cycles assigned to each respective one of the plurality of different force ranges with the baler controller, and multiply the number of movement cycles assigned to each respective one of the plurality of different force ranges by the respective cycle degradation value associated with their respective one of the plurality of different force ranges to calculate a respective usage value for each respective one of the plurality of different force ranges. The baler controller may then aggregate the respective usage values for all of the plurality of different force ranges with the baler controller to define a cumulative usage value for a component of a drivetrain motivating the plunger. The baler controller may compare the cumulative usage value for the component of the drivetrain to a component threshold value to determine if the cumulative usage value for the component is greater than the component threshold value or if the cumulative usage value for the component is equal to or less than the component threshold value. When the cumulative usage value for the component is greater than the component threshold value, the baler controller may automatically communicate a notification signal to a communicator. The notification signal is operable and/or configured to cause the communicator to generate a message to indicate suggested maintenance of the component of the drivetrain.

Accordingly, the baler implement and the process described herein tracks the force applied to the plunger during each movement cycle, calculates an amount of usage or wear caused by the force of each movement cycle, aggregates the calculated amount of wear for each movement cycle during operation to determine the cumulative usage value. The baler controller may then generate the notification signal when the cumulative usage value exceeds the component threshold value, which may be defined to equal a value associated with a likely degree of component failure based on experimental testing. Accordingly, the baler implement and the method described herein may automatically notify an operator of recommended maintenance for the component of the drivetrain prior to component failure, and based on the actual use and stress induced into the component, and not just a pre-defined number of cycles, time or bales.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view showing a tow vehicle pulling a baler implement through a field.
FIG. 2 is a schematic cross-sectional view of the baler implement.
FIG. 3 is a schematic perspective view showing a plunger and associated force sensors of the baler implement.
FIG. 4 is a graph representing data collected and calculations performed while executing a process of monitoring the operation of the baler implement.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

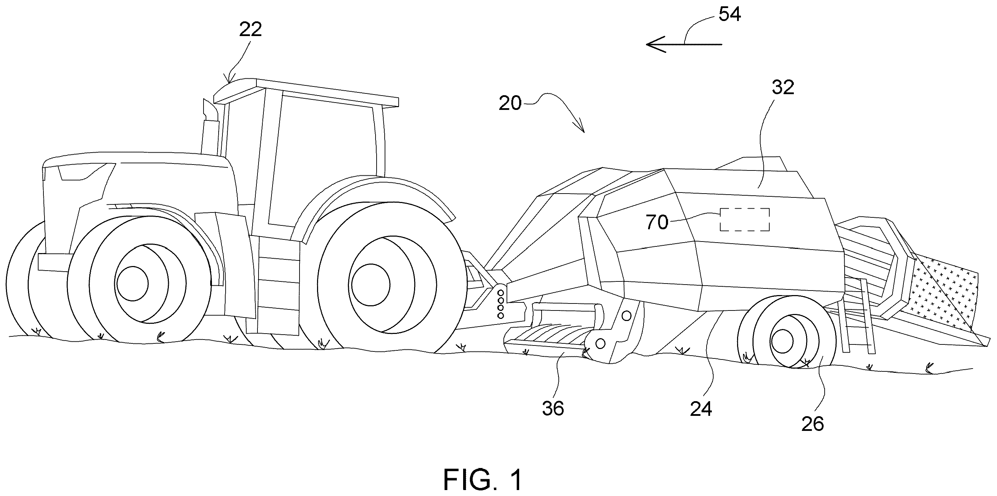

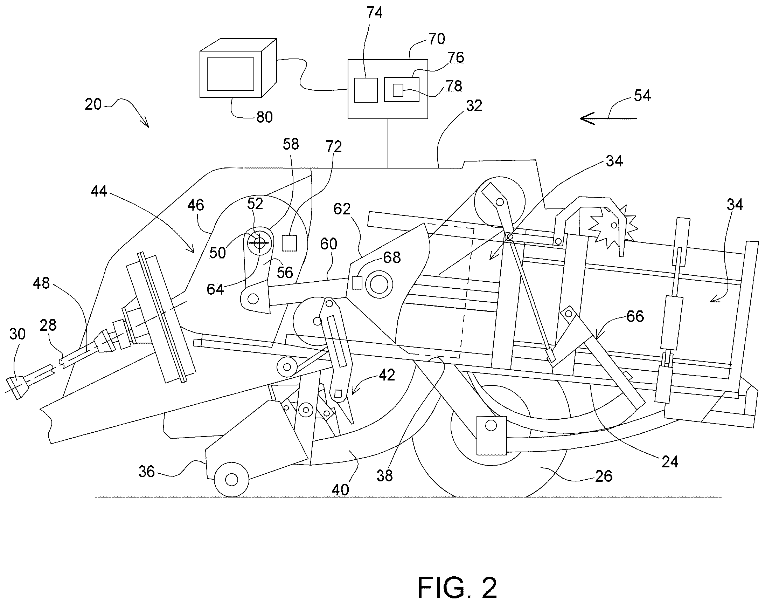

Referring to the Figures, wherein like numerals indicate like parts throughout the several views, a baler implement is generally shown at 20 in FIGS. 1 and 2. The baler implement 20 gathers and forms crop material into a bale having a parallelepiped shape. Referring to FIG. 1 the baler implement 20 is shown as a large square baler. However, it should be appreciated that the teachings of this disclosure may be applied to a small square baler, and are not limited to the example implementation of the large square baler shown in the Figures and described herein.

As shown in FIG. 1, a traction unit or tow vehicle 22, such as but not limited to an agricultural tractor, is coupled to the baler implement 20 for pulling and powering the baler implement 20. However, it should be appreciated that in other embodiments, the baler implement 20 may be self-propelled, in which case the traction unit and the baler implement 20 are configured as a single, self-propelled vehicle.

As depicted in FIG. 1, the baler implement 20 may move across a field and gather and process crop material to form the bale. The baler implement 20 may then eject the formed bale from the rear of the baler implement 20.

Referring to FIG. 2, the example implementation of the baler implement 20 includes a frame 24, ground engaging devices 26, such as but not limited to wheels or tracks, and a power input 28 configured to receive rotational power from a power source 30. The power input 28 may include, for example, a power-take-off (PTO) shaft, which can receive rotational power from a power source 30, such as but not limited to a PTO output of the traction unit.

The baler implement 20 includes a housing 32 or body, which generally shields various internal components of the baler implement 20. The housing 32 is attached to and supported by the frame 24. The housing 32 includes multiple wall sections or panels that form and/or define a baling chamber 34. The baling chamber 34 may alternatively be referred to as a compression chamber (shown in FIG. 2) for forming the bale.

The baler implement 20 includes a pick-up mechanism 36. The pick-up mechanism 36 is disposed proximate the forward end of the frame 24. The pick-up mechanism 36 gathers crop material from the ground surface and directs the gathered crop material toward and into an inlet 38 of the baling chamber 34 of the baler implement 20. The pickup may include, but is not limited to tines, forks, augers, conveyors, baffles, etc., for gathering and moving the crop material.

The pick-up mechanism 36 directs the gathered crop material into a pre-compression passageway 40, which stores a volume of gathered crop material. A feeder system 42 includes a plurality of forks, which are timed to move the crop material from the pre-compression passageway 40 through the inlet 38 and into the baling chamber 34.

The power input 28, e.g., a PTO shaft, is connected to a drivetrain 44 of the baler implement 20. The power input 28 provides rotational power to the drivetrain 44. The drivetrain 44 is coupled to the power input 28 for receiving the rotational power from the power input 28 and configured to convert the rotational power from the power input 28 into reciprocating linear movement. The drivetrain 44 may include, but is not limited to, a gearbox 46 which converts rotational motion about a generally longitudinal axis 48 of the baler implement 20 to rotational motion of an output shaft 50 of the gearbox 46 about a generally transverse axis 52 of the baler implement 20. The transverse axis 52 is disposed generally perpendicularly and/or orthogonally relative to the longitudinal axis 48 of the baler implement 20. The longitudinal axis 48 of the baler implement 20 extends generally between a forward end and a rearward end of the baler implement 20, generally along a direction of travel 54 of the baler implement 20.

A crank arm 56 is coupled to the output shaft 50 of the gearbox 46. The crank arm 56 is rotatable with the output shaft 50 of the gearbox 46 about the transverse axis 52. The crank arm 56 extends from the transverse axis 52 radially outward to a distal end 58 of the crank arm 56, radially spaced a distance from the transverse axis 52. A connecting link 60 interconnects the distal end 58 of the crank arm 56 and a plunger 62. The plunger 62 is moveable in a reciprocating motion within the baling chamber 34 through a plurality of movement cycles. The plunger 62 moves from a fully retracted position, to a fully extended position, and back to the fully retracted position during each respective movement cycle. Rotational movement of the crank arm 56 about the transverse axis 52 moves the connecting link 60 linearly along the longitudinal axis 48, which in turn moves the plunger 62 in its back- and-forth reciprocating motion within the baling chamber 34. The drive train may include a crank bearing 64 disposed between and rotatably supporting the distal end 58 of the crank arm 56 and the connecting link 60.

During operation, the plunger 62 extends into the baling chamber 34, thereby compressing the crop material, and then at least partially retracts from the baling chamber 34 to complete a movement cycle. After each movement cycle of the plunger 62, the feeder moves more crop material into the baling chamber 34, i.e., compression chamber, after which the reciprocating motion of the plunger 62 is repeated.

When the bale is formed within the baling chamber 34, a knotter system 66 wraps a plurality of twine strands around the bale to secure the shape of the bale. The knotter system 66 wraps the twine around a longitudinal extent or longest length of the bale, with each individual twine strand encircling the bale. The knotter system 66 ties each end of the twine of each respective twine strand together to form a knot, securing each respective twine strand in place.

In the example implementation shown in the figures and described herein, a completed bale is pushed off a rearward end of the baler implement 20 by a subsequently formed bale, or otherwise discharged off the rearward end of the baler implement 20 by a powered roller or some other discharge mechanism, and whereby the bale is deposited on the ground surface.

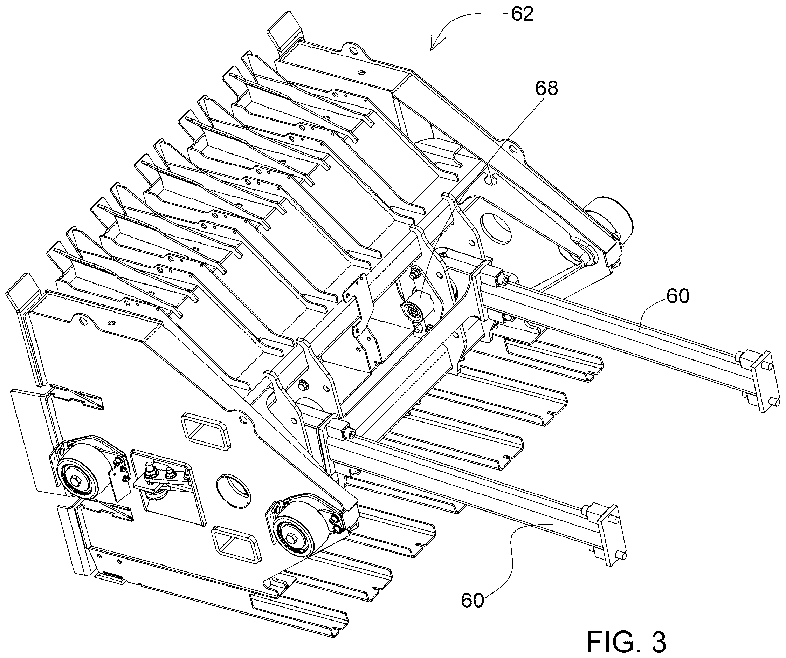

Referring to FIG. 3, the baler implement 20 further includes a force sensor 68. The force sensor 68 may be, but is not required to be, coupled to the plunger 62, and is operable and/or configured to detect data related to a force applied to the plunger 62 during movement of the plunger 62 through each respective movement cycle, particularly while compressing the crop material within the baling chamber 34. It should be appreciated that as the plunger 62 compresses the crop material within the baling chamber 34, the crop material exerts a reactionary force against the plunger 62. The plunger 62 in turn may transmit the reactionary force through the drivetrain 44 of the baler implement 20. In other implementations, the force sensor 68 may be coupled to, but is not limited to, the crank arm 56, or the connecting link 60.

The force sensor 68 communicates a force sensor signal indicative of the detected data to a baler controller 70. The force sensor 68 may include any device that directly or indirectly measures forces, such as but not limited to a load cell, a strain gauge, a piezoresistive sensor, piezoelectric sensor, a capacitance sensor, etc. The force sensor 68 may directly measure the force applied against the plunger 62, or may measure some other characteristic upon which the baler controller 70 may derive, determine and/or calculate the force applied to the plunger 62.

As shown in FIG. 2, the baler implement 20 may further include a position sensor 72. The position sensor 72 may be coupled to one of the plunger 62 or a component of the drivetrain 44, e.g., the connecting link 60, the crank arm 56, or the output shaft 50 of the gearbox 46. It should be appreciated that the position sensor 72 may include multiple separate devices cooperating to detect data from different locations and/or sources for identifying the position of the plunger 62. For example, the position sensor 72 may be configured to detect data related to a position of the plunger 62 relative to a position and/or condition of the drivetrain 44 and/or some other component of the baler implement 20 suitable for determining a beginning and an end of each movement cycle. Alternatively, and/or additionally, the position sensor 72 may be configured to detect data related to a position of the plunger 62 within each respective movement cycle of the plunger, i.e., a relative position between the beginning and end of each movement cycle. The position sensor 72 may further communicate a position sensor signal indicative of the detected data to the baler controller 70. The position sensor 72 may include any device that directly or indirectly measures position of an object and/or data that the baler controller 70 may use to determine a position of an object, such as, but not limited to, an optical sensor, a rotational encoder, a linear encoder, a hall effect sensor, a capacitance displacement sensor, a proximity sensor, etc.

The baler controller 70 may be disposed in communication with the force sensor 68 and the position sensor 72. The baler controller 70 is operable and/or configured to receive data signals from the force sensor 68 and the position sensor 72. While the baler controller 70 is generally described herein as a singular device, it should be appreciated that the baler controller 70 may include multiple devices linked together to share and/or communicate information therebetween. Furthermore, it should be appreciated that the baler controller 70 may be located on the baler implement 20 or located remotely from the baler implement 20.

The baler controller 70 may alternatively be referred to as a computing device, a computer, a controller, a control unit, a control module, a module, etc. The baler controller 70 includes a processor 74, a memory 76, and all software, hardware, algorithms, connections, sensors, etc., necessary to execute the process described herein. As such, a method may be embodied as a program or algorithm operable and/or configured on the baler controller 70. It should be appreciated that the baler controller 70 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 76 or received via the communication capabilities) to control or communicate with one or more other components. In certain embodiments, the baler controller 70 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 70 may be in communication with other components on the baler implement 20, such as hydraulic components, electrical components, and operator inputs within an operator station of an associated work vehicle. The baler controller 70 may be electrically connected to these other components wirelessly or via a wiring harness such that messages, commands, and electrical power may be transmitted between the baler controller 70 and the other components. Although the baler controller 70 is referenced in the singular, in alternative embodiments the configuration and functionality described herein can be split across multiple devices using techniques known to a person of ordinary skill in the art.

The baler controller 70 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 76 may include any non-transitory/tangible medium which participates in providing data or computer-readable instructions. The memory 76 may be non-volatile or volatile. Non-volatile media may include, for example, optical or magnetic disks and other persistent memory. Example volatile media may include dynamic random access memory (DRAM), which may constitute a main memory. Other examples of embodiments for the memory include a floppy, flexible disk, or hard disk, magnetic tape or other magnetic medium, a CD-ROM, DVD, and/or any other optical medium, as well as other possible memory devices such as flash memory.

The baler controller 70 includes the tangible, non-transitory memory 76 on which are recorded computer-executable instructions, including a drivetrain monitoring algorithm 78. The processor 74 of the baler controller 70 is configured for executing the drivetrain monitoring algorithm 78. The drivetrain monitoring algorithm 78 implements a method of monitoring operation and maintenance of the baler implement 20, described in detail below.

The process of monitoring operation and maintenance of the baler implement 20 includes operating the baler implement 20, which includes moving the plunger 62 in a reciprocating motion through a plurality of movement cycles. It should be appreciated that the plunger 62 moves from the fully retracted position, to the fully extended position, and back to the fully retracted position during each respective movement cycle. This process or movement cycle is repeated for each subsequent movement cycle. During each movement cycle, crop material may be compressed within the baling chamber 34 as the plunger 62 moves toward and into the fully extended position. Movement of the plunger 62 into the fully retracted position resets the baler implement 20 to receive another charge of crop material into the baling chamber 34 as is understood by those skilled in the art. During each respective movement cycle, a reactionary force is applied against the plunger 62. The forces applied to the plunger 62 during of each movement cycle are transmitted upstream to other components of the drivetrain 44, such as the connecting link 60, the crank arm 56, the crank bearing 64, the gearbox 46, etc. Each applied force imparts or causes a small amount of damage to these components, which accumulates over time, and which causes wear associated with normal operation. Eventually, during normal operation, the accumulation of the effects on these components degrades the components to an extent that the components require maintenance and/or replacement.

In order to determine when to request maintenance for one or more components of the drivetrain 44 of the baler implement 20, the baler controller 70 may determine a cumulative usage value for a component of the drivetrain 44, based on the force sensor signal indicative of the force applied to the plunger 62. The component of the drivetrain 44 may be defined to include any component of the baler implement 20 affected by the forces applied to the plunger 62. For example, the component of the drivetrain 44 may include, but is not limited to, the crank bearing 64 or the gearbox 46.

In order to determine the cumulative usage value for the component of the drivetrain 44, the baler controller 70 may determine a beginning and an end of each respective movement cycle of the plunger 62 from the position sensor signal. In other implementations, the baler controller 70 may determine a relative position of the plunger within each respective movement cycle, i.e., a current position between the beginning and end of each respective movement cycle. The baler controller 70 may use the data from the position sensor signal to determine the beginning and the end of each respective movement cycle, or the current position of the plunger 62 between the beginning and the end of each respective movement cycle. For example, the position sensor signal may include data related to a rotational position of the output shaft 50 of the gearbox 46. A default rotational position of the output shaft 50 of the gearbox 46 may be defined as the beginning and end of each movement cycle. A respective movement cycle may begin when the output shaft 50 of the gearbox 46 is moved from the default rotational position, and ends when the output shaft 50 of the gearbox 46 returns to the default rotational position, thereby completing one revolution of the output shaft 50 about the transverse axis 52. In another implementation, the position sensor signal may include data related to a linear position of the connecting link 60 along the longitudinal axis 48, from which the beginning and the end of each movement cycle may be determined, or the relative position of the plunger 62 between the beginning and the end of each respective movement cycle may be determined. It should be appreciated that the position data and the manner in which each movement cycle of the plunger 62 is determined may differ from the example implementations described herein.

The baler controller 70 may further determine a peak force or a peak torque applied to the plunger 62 during each respective movement cycle. Once the beginning and the end of each respective movement cycle is determined, the baler controller 70 may use the data from the force sensor signal to determine the peak force applied to the plunger 62 during that particular movement cycle. The baler controller 70 may further consider data from the position sensor identifying the current location of the plunger within the movement cycle to determine the peak torque applied to the plunger 62 during that particular movement cycle. Typically, the peak force occurs when the plunger 62 reaches the fully extended position with maximum compression of the crop material within the baling chamber 34. The baler controller 70 may register or store the peak force for each respective movement cycle in the memory 76.

The baler controller 70 may correlate the peak force and/or peak torque for each respective movement cycle to a cycle degradation value. The cycle degradation value represents an amount of damage or wear caused in the component as a result of the peak force of each respective movement cycle. It should be appreciated that the damage or wear caused by the peak force increases as the peak force increases. As such, a peak force of a first respective movement cycle that is less than a peak force of a second respective movement cycle will cause less damage to the component of the drivetrain 44. Accordingly, the cycle degradation value associated with a lower peak force is less than the cycle degradation value associated with a higher peak force.

In order to track and monitor the cycle degradation value for each respective movement cycle, the baler controller 70 may assign the peak force of each respective movement cycle into one of a plurality of different force ranges. Each of the different force ranges may be considered a "bucket", into which peak forces of similar values may be grouped, and include a specific range of possible forces. As such, each particular possible force range will have a minimum, and maximum, and will include all force values between the minimum and the maximum for that particular force range. The plurality of different force ranges cover a spectrum of possible peak forces the plunger 62 is likely to encounter. It should be appreciated, however, that each individual force range covers a specific portion of the spectrum, such that the individual force ranges do not overlap with any of the other force ranges.

Each respective one of the plurality of different force ranges may include a respective cycle degradation value. The cycle degradation value of each of the different force ranges increases as the range of forces included within that range increases. As such, as the range of forces within a particular grouping increases, the respective cycle degradation factor also increases. The number of different force ranges may vary. It should be appreciated that a higher number of different force ranges increases accuracy of the process, and that the number of different force ranges may be defined based on the particular application and the degree of precision desired.

The baler controller 70 may then count the number of the movement cycles or peak force values assigned to each respective one of the plurality of different force ranges. It should be appreciated that the peak force value of each movement cycle is assigned to only one of the plurality of different force ranges, such that it is only counted once. Notably, the baler controller 70 counts the number of movement cycles assigned to and/or saved in each of the different force ranges, not the value of the peak force. With respect to the process described herein, the value of the peak force for each movement cycle is only used to determine which one of the plurality of different force ranges that particular movement cycle is assigned too.

As noted above, each respective one of the plurality of different force ranges will have a respective cycle degradation value associated with it. The baler controller 70 multiplies the counted number of movement cycles assigned to each respective one of the plurality of different force ranges by the respective cycle degradation value associated with their respective one of the plurality of different force ranges to calculate a respective usage value for each respective one of the plurality of different force ranges. As such, the usage value for each individual one of the plurality of different force ranges is calculated by multiplying the number of movement cycles assigned to that force range by the cycle degradation value associated with the force range.

The baler controller 70 may then aggregate or sum the respective usage values for all of the plurality of different force ranges to define the cumulative usage value for the component. Accordingly, the cycle degradation value for each respective force range represents an amount of damage done to the component for each movement cycle within that particular force range. The usage value for a particular force range is calculated by multiplying the number of movement cycles in a particular force range by the cycle degradation value for that particular force range. The usage value for a particular force range represents the amount of damage caused to the component by all of the movement cycles having a peak force within that particular force range. By summing up all of the usage values for each of the plurality of different force ranges, the baler controller 70 may calculate the cumulative usage value for the component. The cumulative usage value for the component represents a total amount of damage done to the component by all of the movement cycles.

The baler controller 70 may then compare the cumulative usage value for the component of the drivetrain 44 to a component threshold value to determine if the cumulative usage value for the component is greater than the component threshold value or if the cumulative usage value for the component is equal to or less than the component threshold value. The component threshold value is specific to the particular component. For example, if the component is defined as the crank bearing 64, then the component threshold value may be defined as a bearing threshold value. Similarly, if the component is defined as the gearbox 46, then the component threshold value may be defined as a gearbox 46 threshold value.

The component threshold value may be based on a component degradation model that may be developed via laboratory testing. The component degradation model relates the cumulative usage value to an expected failure point of the component. The component threshold value may be defined, for example, as a percentage of the expected failure point of the component. For example, the component threshold value may be defined to equal a value that is 90% of the expected failure point of the component. When the cumulative usage value increases to a magnitude that is equal to the component threshold value, the baler controller 70 may determine that the component has incurred approximately 90% of the damage expected prior to expected failure. The component threshold value may be set to equal a value less than the expected failure point of the component. It should be appreciated that defining the component threshold value to include a lower value provides earlier notification of required maintenance, and therefore more time to obtain maintenance of the component, but may result in the component being replaced earlier then necessary. In contrast, defining the component threshold value to include a higher value, nearer the expected failure point, may provide maximum useful life of the component, but may also result in failure to notify the operator of the need for maintenance of the component if the component fails prior to estimations derived from the component degradation model.

When the cumulative usage value for the component is greater than the component threshold value, the baler controller 70 may automatically communicate a notification signal to a communicator 80. The notification signal is operable and/or configured to cause the communicator 80 to generate a message to indicate suggested maintenance of the component of the drivetrain 44. The communicator 80 may include a device capable of communicating the message to an operator or automated maintenance system. For example, the communicator 80 may include, but is not limited to, a warning light, a speaker, a visual display, a haptic device, etc.. In one example, the notification signal causes a visual display to generate a message indicating that maintenance to the component is recommended. In another implementation, the notification signal may register a request for maintenance for the component with a scheduling computer. It should be appreciated that the notification signal, the communicator 80, and the message generated thereby may differ from the example implementations described herein, and may include any system and device capable of communicating a recommendation for service and/or maintenance of the component.

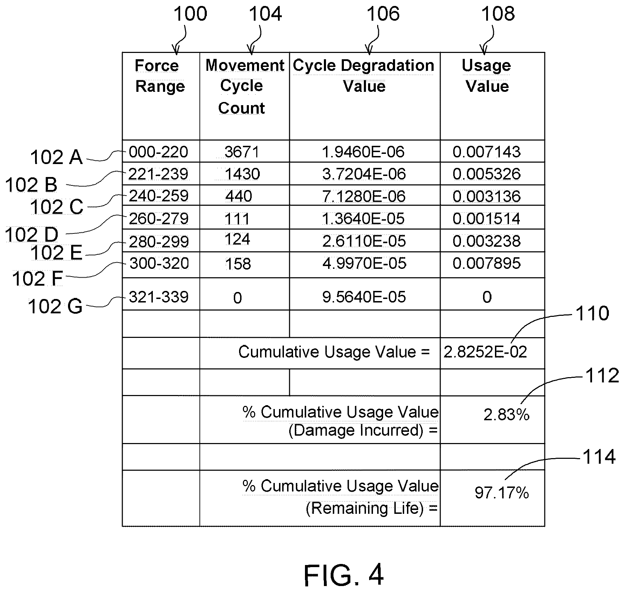

An example of the process described herein is provided with reference to FIG. 4. Referring to FIG. 4, the plurality of different force ranges are shown in column 100, which includes a first force range 102A, a second force range 102B, a third force range 102C, a fourth force range 102D, a fifth force range 102E, a sixth force range 102F, and a seventh force range 102G. The exemplary force ranges shown in column 100 are expressed in kilonewtons (kN). An ongoing movement cycle count is shown in column 104. The movement cycle count is the number of movement cycles that have been assigned to each respective force range. For example, the movement cycle count for the first force range 102A is shown as 3,671 movement cycles that have been assigned to the first force range 102A. The cycle degradation value for each respective force range 102A-102G is shown in column 106. The cycle degradation value for each respective force range 102A-102G is the amount of damage that one movement cycle in that particular force range may impart into the component, e.g., the crank bearing, based on an expected failure point determined via testing. Notably, the amount of damage caused by each cycle increases as the force range increases, whereby movement cycles in the higher force ranges cause more damage per cycle than movement cycles in the lower force ranges. Column 108 shows the usage value for each respective one of the force ranges 102A-102G. The usage value for each respective one of the plurality of force ranges 102A-102G is the amount of wear or damage caused by the number of movement cycles in that particular force range, and may be calculated by multiplying the movement cycle count shown in column 104 of each respective force range 102A-102G by the cycle degradation value shown in column 106 of each respective force range 102A-102G. The cumulative usage value is shown at 110 in FIG. 4, and represents the summation of all of the individual usage values shown in column 108 for all of the plurality of force ranges 102A-102G. The cumulative usage value may be expressed as a percentage, such as shown at 112. For example, as shown in FIG. 4, the cumulative usage value, expressed as a percentage, estimates that the component has incurred a cumulative usage of approximately 2.83%. FIG. 4 shows the remaining life of the component, expressed as a percentage, at 114, which is the percentage shown at 112 subtracted from 100. As shown at 114, the component of this example has estimated to have approximately 97.17% of its remaining useful life left. When the cumulative usage value shown at 112 reaches and/or exceeds the component threshold value, which may be defined, for example, at a value of 99% wear incurred, (corresponding to approximately 1% remaining life) then the baler controller 70 may generate the notification signal as described above. It should be appreciated that the component threshold value may be defined to include a value different from the example implementation described above.

The baler implement 20 and the process described herein improves the timing for maintenance notifications by basing the maintenance notification on the actual amount of force imparted into the component. The force is directly related to an actual amount of damage incurred by the component. As such, the process described herein provides more accurate estimations of required component maintenance scheduling then other systems that base the estimation of required maintenance on machine operating time and/or a bale cycle count.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (20) for forming crop material into a bale having a parallelepiped shape, the baler implement (20) comprising:
a plunger (62) moveable in a reciprocating motion within a compression chamber (34) through a plurality of movement cycles, wherein the plunger (62) moves from a fully retracted position, to a fully extended position, and back to the fully retracted position during each respective movement cycle;
a power input (28) configured to receive rotational power from a power source (30);
a drivetrain (44) coupled to the power input (28) for receiving the rotational power from the power input (28) and configured to convert the rotational power from the power input (28) into reciprocating linear movement of the plunger (62) for moving the plunger (62) through the plurality of movement cycles;
a force sensor (68) operable to detect data related to a force applied to the plunger (62) and communicate a force sensor signal indicative of the detected data;
a baler controller (70) including a processor (74) and a memory (76) having a drivetrain monitoring algorithm (78) stored thereon, wherein the processor (74) is operable to execute the drivetrain monitoring algorithm (78) to:
determine a cumulative usage value for a component of the drivetrain (44) from the force sensor signal indicative of the force applied to the plunger (62);
compare the cumulative usage value for the component of the drivetrain (44) to a component threshold value to determine if the cumulative usage value for the component is greater than the component threshold value or if the cumulative usage value for the component is equal to or less than the component threshold value; and
communicate a notification signal to a communicator (80) when the cumulative usage value for the component is greater than the component threshold value, whereby the notification signal is operable to cause the communicator (80) to generate a message to indicate suggested maintenance of the component of the drivetrain (44).

2. The baler implement (20) set forth in claim 1, wherein the processor (74) is operable to execute the drivetrain monitoring algorithm (78) to determine a peak force applied to the plunger (62) during each respective movement cycle.

3. The baler implement (20) set forth in claim 1 or 2, wherein the processor (74) is operable to execute the drivetrain monitoring algorithm (78) to assign the peak force of each respective movement cycle into one of a plurality of different force ranges, with each respective one of the plurality of different force ranges having a respective cycle degradation value.

4. The baler implement (20) according to at least one of the preceding claims, wherein the processor (74) is operable to execute the drivetrain monitoring algorithm (78) to count the number of the movement cycles assigned to each respective one of the plurality of different force ranges.

5. The baler implement (20) according to at least one of the preceding claims, wherein the processor (74) is operable to execute the drivetrain monitoring algorithm (78) to multiply the number of movement cycles assigned to each respective one of the plurality of different force ranges by the respective cycle degradation value associated with their respective one of the plurality of different force ranges to calculate a respective usage value for each respective one of the plurality of different force ranges.

6. The baler implement (20) according to at least one of the preceding claims, wherein the processor (74) is operable to execute the drivetrain monitoring algorithm (78) to aggregate the respective usage values for all of the plurality of different force ranges to define the cumulative usage value for the component.

7. The baler implement (20) set forth in claim 2, wherein the processor (74) is operable to execute the drivetrain monitoring algorithm (78) to correlate the peak force for each respective movement cycle to a cycle degradation value.

8. The baler implement (20) according to at least one of the preceding claims, wherein the processor (74) is operable to execute the drivetrain monitoring algorithm (78) to aggregate the respective cycle degradation value from each of the plurality of movement cycles to define the cumulative usage value.

9. The baler implement (20) according to at least one of the preceding claims, wherein the drivetrain (44) includes:
a gearbox (46) coupled to the power input (28) for receiving the rotational power therefrom, wherein the gearbox (46) is configured to convert rotational movement about a longitudinal axis (48) into rotational movement about a transverse axis disposed orthogonal to the longitudinal axis (48);
a crank arm (56) coupled to the gearbox (46) and rotatable about the transverse axis, wherein the crank arm (56) extends from the transverse axis radially outward to a distal end (58);
a connecting link (60) interconnecting the distal end (58) of the crank arm (56) and the plunger (62), whereby rotational movement of the crank arm (56) about the transverse axis moves the connecting link (60) linearly along the longitudinal axis (48); and
a crank bearing (64) disposed between and rotatably supporting the distal end (58) of the crank arm (56) and the connecting link (60).

10. The baler implement (20) according to at least one of the preceding claims, wherein the component of the drivetrain (44) includes the crank bearing (64) and the component threshold value is a bearing threshold value.

11. The baler implement (20) according to at least one of the preceding claims, wherein the component of the drivetrain (44) includes the gearbox (46) and the component threshold value is a gearbox threshold value.

12. The baler implement (20) according to at least one of the preceding claims, further comprising a position sensor (72) coupled to one of the plunger (62) or the drivetrain (44) and operable to detect data related to a position of the plunger (62) and communicate a position sensor signal indicative of the detected data.

13. The baler implement (20) according to at least one of the preceding claims, wherein the processor (74) is operable to execute the drivetrain monitoring algorithm (78) to determine at least one of a beginning and an end of each respective movement cycle of the plunger (62) from the position sensor signal, or a relative position of the plunger (62) within each respective movement cycle from the position sensor signal.

14. The bale implement according to at least one of the preceding claims, wherein the processor (74) is operable to determine the cumulative usage value for the component of the drivetrain (44) from the force sensor signal indicative of the force applied to the plunger (62), the position sensor signal indicative of the end of each respective movement cycle of the plunger (62), and the position sensor signal indicative of the relative position of the plunger (62) within each respective movement cycle.

15. A method of monitoring a baler implement (20), in particular a baler implement (20) according to one of the claims 1 to 14, having a plunger (62) moveable in a reciprocating motion within a compression chamber (34) for forming a bale having a parallelepiped shape, the method comprising:
moving the plunger (62) in a reciprocating motion through a plurality of movement cycles, wherein the plunger (62) moves from a fully retracted position, to a fully extended position, and back to the fully retracted position during each respective movement cycle;
determining a peak force applied to the plunger (62) during each respective movement cycle with a baler controller (70);
assigning the peak force of each respective movement cycle into one of a plurality of different force ranges with the baler controller (70), wherein each respective one of the plurality of different force ranges includes a respective cycle degradation value;
counting a number of movement cycles assigned to each respective one of the plurality of different force ranges with the baler controller (70);
multiplying the number of movement cycles assigned to each respective one of the plurality of different force ranges by the respective cycle degradation value associated with their respective one of the plurality of different force ranges, with the baler controller (70), to calculate a respective usage value for each respective one of the plurality of different force ranges;
aggregating the respective usage values for all of the plurality of different force ranges with the baler controller (70) to define a cumulative usage value for a component of a drivetrain (44) motivating the plunger (62);
comparing the cumulative usage value for the component of the drivetrain (44) to a component threshold value with the baler controller (70) to determine if the cumulative usage value for the component is greater than the component threshold value or if the cumulative usage value for the component is equal to or less than the component threshold value; and
automatically communicating a notification signal to a communicator (80) with the baler controller (70) when the cumulative usage value for the component is greater than the component threshold value, whereby the notification signal is operable to cause the communicator (80) to generate a message to indicate suggested maintenance of the component of the drivetrain (44).
